# EUROPÄISCHE PATENTANMELDUNG

(11) **EP 1 159 863 A2**
(43) Veröffentlichungstag der Anmeldung: **05.12.2001**
(21) Anmeldenummer: 01111501.1
(22) Anmeldetag: 11.05.2001
(51) Int. Cl.: A01B 73/00

(54) **Erntegerät**

(30) Priorität: 27.05.2000 DE 10026500
(71) Anmelder: Maschinenfabrik Kemper GmbH & Co. KG, 48703 Stadtlohn (DE)
(72) Erfinder: Schulze Hockenbeck, Leo, 48351 Everswinkel (DE)
(74) Vertreter: Holst, Sönke, Dr.

(57) **Zusammenfassung**

Die Erfindung bezieht sich auf ein landwirtschaftliches Erntegerät (10) mit einem ersten Element, das durch einen Antrieb (38) von einer Betriebs- in eine Transportstellung und/oder von einer Transport- in eine Betriebsstellung verbringbar ist, und mit einem zweiten Element, das mittels eines ihm zugeordneten Hydraulikzylinders (50) von einer Betriebs- in eine Transportstellung und/oder von einer Transport- in eine Betriebsstellung verbringbar ist. Um eine unkomplizierte Steuerung des zweiten Hydraulikzylinders (54) zu verwirklichen, wird vorgeschlagen, dass der dem zweiten Element zugeordnete, zweite Hydraulikzylinder (50) mit einem ersten Hydraulikzylinder (54), der durch den Antrieb (38) des ersten Elements bewegbar ist, in hydraulischer Antriebsverbindung steht.

## Beschreibung

Die Erfindung betrifft ein landwirtschaftliches Erntegerät mit einem ersten Element, das durch einen Antrieb von einer Betriebs- in eine Transportstellung und/oder von einer Transport- in eine Betriebsstellung verbringbar ist, und mit einem zweiten Element, das mittels eines ihm zugeordneten Hydraulikzylinders von einer Betriebs- in eine Transportstellung und/oder von einer Transport- in eine Betriebsstellung verbringbar ist.

In der DE 36 05 933 A ist ein Erntevorsatz einer Erntemaschine beschrieben, der aus einem Grundrahmen und zwei separat schwenkbar daran angebrachten Mäh- und Aufnahmevorsatzteilen besteht, an denen verschiebbare Haspeln vorgesehen sind. Wird der Erntevorsatz von seiner Betriebsstellung in die Transportstellung verbracht, um mit der Erntemaschine, die den Erntevorsatz trägt, auf einer Straße fahren zu können, werden nacheinander die Haspeln und anschließend nacheinander das linke und rechte Mäh- und Aufnahmevorsatzteil in die Transportstellung verbracht. Dazu sind separate Hydraulikzylinder vorgesehen, die durch eine entsprechende Steuerung nacheinander aktiviert werden.

In der DE 43 22 263 A wird eine Mähvorrichtung zum Mähen von Halmgut vorgeschlagen, die zwei quer zur Fahrtrichtung orientierte, in eine Transportstellung unter einen mittigen Mähwerksbalken verschwenkbare seitliche Mähwerksbalken aufweist. Die drei Mähwerksbalken sind mit drehbaren Mähmessern versehen. Die Verschwenkung der äußeren Mähwerksbalken erfolgt durch einen doppeltwirkenden Hydraulikzylinder, während der mittige Mähwerksbalken durch einen ihm zugeordneten Hydraulikzylinder nach oben in die Transportstellung verschoben wird. Zur Bereitstellung eines Rückweichweges der seitlichen Mähwerksbalken entgegen der Fahrtrichtung sind die Hydraulikzylinder der Mähwerksbalken mit einem Zusatzhubraum versehen. Der Zusatzhubraum ist hydraulisch mit einem Betriebszylinder zum Anheben des seitlichen Mähwerksbalken verbunden. Im Überlastfall wird somit das Öl aus dem Zusatzhubraum des Hydraulikzylinders herausgedrängt und treibt den Betriebszylinder an.

Das der Erfindung zugrunde liegende Problem wird darin gesehen, dass bisher bei einem landwirtschaftlichen Erntegerät mit mehreren Elementen, die getrennt in die Transportstellung zu verbringen sind, eine aufwändige Steuerung der einzelnen, den jeweiligen Elementen zugeordneten Hydraulikzylinder erforderlich ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt ein landwirtschaftliches Erntegerät mit einem ersten Element vor, welches mittels eines geeigneten Antriebs von einer Transportstellung in eine Betriebsstellung und/oder umgekehrt verbringbar ist. Der Antrieb des ersten Elements kann auf beliebige Weise erfolgen, beispielsweise durch einen Elektro- oder Hydraulikmotor bzw. -zylinder, von Hand oder unter Zwischenschaltung eines Antriebsstrangs über den Antriebsmotor einer das Erntegerät tragenden Erntemaschine. Das erste Element (bzw. der Antrieb) ist mechanisch mit einem ersten Hydraulikzylinder gekoppelt, so dass letzterer beim Bewegen des ersten Elements durch den Antrieb angetrieben wird und als Pumpe für Hydraulikflüssigkeit wirkt. Die aus dem ersten Hydraulikzylinder herausgedrückte Hydraulikflüssigkeit dient zum hydraulischen Antrieb eines zweiten Hydraulikzylinders, der mit einem zweiten Element des Erntegeräts gekoppelt ist und es von der Transportstellung in die Betriebsstellung verbringt, bzw. von der Betriebsstellung in die Transportstellung. Vorzugsweise ist der zweite Hydraulikzylinder eingerichtet, das zweite Element sowohl von der Betriebs- in die Transportstellung zu verbringen, als auch von der Transport- in die Betriebsstellung. Es wäre aber auch denkbar, dass das zweite Element eine dieser Bewegungen durch einen anderen Antrieb durchführt, oder manuell bzw. mit Unterstützung durch die Schwerkraft bewegt wird.

Anzumerken ist, dass hier unter einer hydraulischen Antriebsverbindung eine hydraulische Verbindung, gegebenenfalls unter Zwischenschaltung anderer Komponenten, wie z. B. Ventilen oder Kolben, verstanden wird, bei der Druck auf hydraulische Weise übertragen wird.

Auf diese Weise erhält man ein landwirtschaftliches Erntegerät, bei dem ein zweites Element selbsttätig, aber ohne aufwändige Steuerung des ihm zugeordneten Hydraulikzylinders in die Transport- bzw. Betriebsstellung verbracht wird. Eine Hydraulikpumpe zum Beaufschlagen der Hydraulikflüssigkeit mit zum Antrieb des zweiten Hydraulikzylinders notwendigem Druck ist nicht erforderlich.

Insbesondere, wenn der zweite Hydraulikzylinder das zweite Element von der Transport- in die Betriebsstellung und von dort auch wieder in die Transportstellung zurückverbringt, bietet es sich an, den ersten und den zweiten Hydraulikzylinder als doppeltwirkende Zylinder zu gestalten. Die beiden Druckräume des ersten und zweiten Hydraulikzylinder sind (direkt oder indirekt) hydraulikflüssigkeitsleitend verbunden, so dass die Hydraulikflüssigkeit zwischen ihnen hin- und hergepumpt wird, wenn der Antrieb des ersten Elements aktiv ist.

Weiterhin ist vorgeschlagen, ein drittes und vorzugsweise auch ein viertes Element mit entsprechenden dritten und vierten Hydraulikzylindern zu versehen, die eingerichtet sind, das ihnen zugeordnete Element von der Betriebs- in die Transportstellung bzw. umgekehrt zu verbringen. Die Hydraulikzylinder können parallel geschaltet sein und direkt durch den ersten Hydraulikzylinder mit Hydraulikflüssigkeit versorgt werden, oder quasi in Reihe geschaltet werden und indirekt, d. h. unter Zwischenschaltung anderer Hydraulikzylinder, vom ersten Hydraulikzylinder beaufschlagt werden.

Es bietet sich insbesondere an, die Hydraulikzylinder in einem geschlossenen hydraulischen Kreis anzuordnen, so dass weder ein Sumpf noch eine Pumpe zur Bereitstellung von Hydraulikflüssigkeit notwendig werden. Dabei ist bevorzugt, jeweils die Kolbenstangendruckräume zweier Zylinder und die Kolbenflächendruckräume zweier Zylinder miteinander zu verbinden. Auf diese Weise erreicht man, dass bei gleichartigen Hydraulikzylindern jeweils gleiche Hübe erzielt werden. Auch wird der erste Hydraulikzylinder mit einem Volumen gefüllt, das seinem Hub entspricht, trotz der unterschiedlich großen Flächen von Kolbenstangen- und Kolbenflächendruckräumen. Diese Lösung bietet sich insbesondere an, wenn eine gerade Anzahl von Hydraulikzylindern zu betätigen ist. Bei einer ungeraden Anzahl kann ein Hydraulikzylinder "leer laufen", also kein weiteres Element bewegen, aber die zum Ankoppeln des letzten Hydraulikzylinders erforderliche proportionale Änderung des Volumenstroms erzeugen. Alternativ wäre bei einer ungeraden Anzahl von Hydraulikzylindern denkbar, einen (oder mehrere) Hydraulikzylinder mit einer sich durch beide Druckräume erstreckenden, durchgehenden Kolbenstange zu verwenden, wie er beispielsweise in der US 5,450,908 A beschrieben wird. Aus einer Druckkammer eines derartigen Hydraulikzylinders strömt immer so viel Flüssigkeit hinaus, wie in die andere Druckkammer hineingepumpt wird.

Die Erfindung kann insbesondere an einem Mähvorsatz mit Einzugs- und Mähvorrichtungen Verwendung finden. Derartige Mähvorsätze sind in der Regel als Vorsatzgerät für einen Mähdrescher oder Feldhäcksler ausgebildet. In einer Ausführungsform als Maisgebiss dienen sie zum Einbringen der ganzen Pflanzen, während sie in einer anderen Ausführungsform als Pflücker zur Ernte von Maiskolben oder anderen Körnerfrüchten dienen.

Das erste Element des Erntegeräts ist in einer bevorzugten Weiterbildung der Erfindung ein durch den Antrieb in eine Transportstellung klappbarer Träger einer Einzugs- und Mähvorrichtung des Mähvorsatzes. Es wird in der Regel durch einen Hydraulikzylinder von der Betriebsstellung, in der es horizontal und quer zur Vorwärtsfahrtrichtung orientiert ist, nach oben oder hinten in die Transportstellung geschwenkt.

Das zweite und/oder dritte Element des Erntegeräts kann ein in der Betriebsstellung in Vorwärtsfahrtrichtung vor und oberhalb von Einzugs- und Mäheinrichtungen des Erntegeräts angeordneter Vordruckbügel sein, welcher durch den ihm zugeordneten, zweiten bzw. dritten Hydraulikzylinder in die Transportstellung nach vorn, oben oder hinten verschwenkt wird.

Das vierte Element des Erntegeräts kann eine Arretierungseinrichtung sein, die in der Transportstellung das Schwenken des Erntegeräts relativ zu der es tragenden Erntemaschine um eine Schwenklagerung unterbindet und die Schwenkbewegung in der Betriebsstellung freigibt.

In den Zeichnungen ist ein nachfolgend näher beschriebenes Ausführungsbeispiel der Erfindung dargestellt. Es zeigt:
- Fig. 1: ein Erntegerät in Draufsicht und in schematischer Darstellung,
- Fig. 2: eine Frontansicht des Erntegeräts aus Figur 1, und
- Fig. 3: ein Schema des hydraulischen Systems des Erntegeräts.

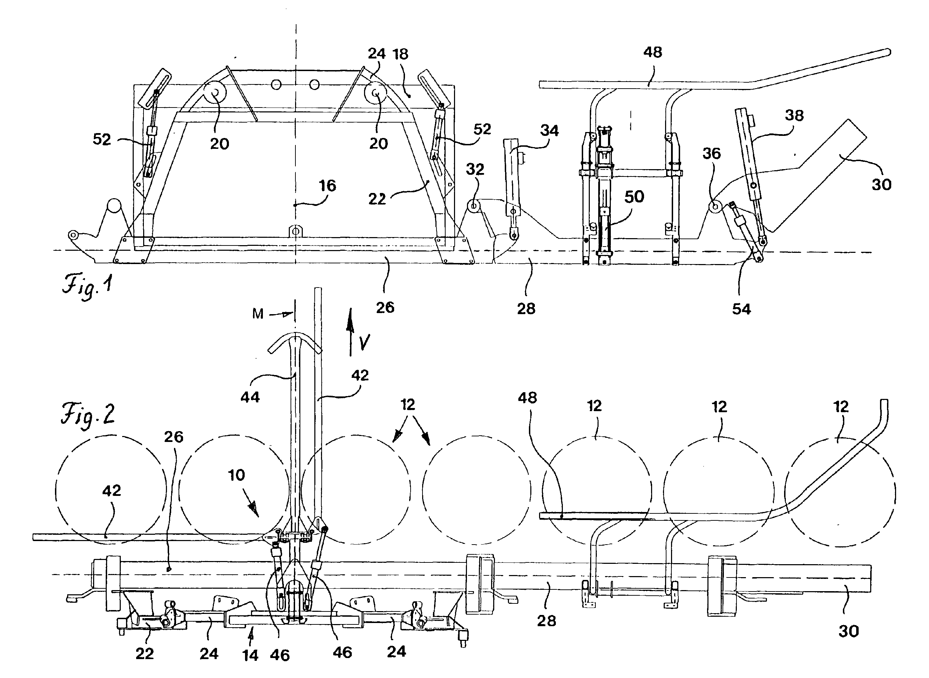

In Figur 1 ist ein landwirtschaftliches Erntegerät 10 in Form eines mit insgesamt zehn Einzugs- und Mäheinrichtungen 12 ausgestatteten Mähvorsatzes dargestellt. Die Einzugs- und Mäheinrichtungen 12 sind symmetrisch zu einer vertikalen Mittelebene M des Erntegeräts 10 angeordnet und dienen zum Einziehen und Abschneiden von auf einem Feld stehenden Pflanzen. In der Zeichnung sind nur die in Vorwärtsfahrtrichtung V rechts der vertikalen Mittelebene M angeordneten Einzugs- und Mähvorrichtungen 12 schematisch wiedergegeben. Die abgeschnittenen, eingezogenen Pflanzen werden in an sich bekannter Weise einer an der - in Figur 1 unten eingezeichneten - Rückseite des Erntegeräts 10 angeordneten Erntemaschine zugeführt, die in der Zeichnung nicht dargestellt ist.

Das Erntegerät 10 ist an der Erntemaschine mittels einer Schwenklagerung 14 befestigt, die eine Drehung des Erntegeräts 10 relativ zur Erntemaschine um eine horizontale, in der vertikalen Mittelebene M und parallel zur Vorwärtsfahrtrichtung V verlaufende Achse 16 (s. Figur 2) ermöglicht. Die Achse 16 ist etwa in mittiger Höhe des Eingangs des Förderkanals der Erntemaschine angeordnet. Die Schwenklagerung 14 umfasst einen an der Erntemaschine befestigten portalförmigen Trägerrahmen 18, an dem oberseitig zwei nach vorn gerichtete, um eine horizontale Achse drehbare Rollen 20 angebracht sind. Auf den Rollen 20 liegen Rohrabschnitte 24 auf, die an der Oberseite eines Schwenkrahmens 22 angebracht sind. Der Schwenkrahmen 22 trägt einen quer zur Vorwärtsfahrtrichtung V orientierten Grundrahmen 26, an dem vier Einzugs- und Mähvorrichtungen 12 angebracht sind. An beiden seitlichen Enden des Grundrahmens 26 ist je ein Mittelrahmen 28 angebracht, der zwei Einzugs- und Mähvorrichtungen 12 trägt. Außen an den Mittelrahmen 28 sind schließlich Außenrahmen 30 befestigt, die jeweils eine Einzugs- und Mähvorrichtung 12 haltern. Die Schwenklagerung 14 ermöglicht dem relativ breiten Erntegerät 10, über einen Winkelbereich von etwa 5° um die Achse 16 zu pendeln, wobei die Rohrabschnitte 24 auf den Rollen 20 abrollen. Eine aktive Steuerung der Pendelbewegung um die Achse 16 ist nicht vorgesehen, da es hinreicht, dass das Erntegerät 10 in der Regel durch den Bodenkontakt parallel zum Boden ausgerichtet ist. Fährt die Erntemaschine beispielsweise durch eine Bodenrinne, pendelt das Erntegerät 10 um die Achse 16 und behält den normalen Bodenkontakt. Auf diese Weise werden Verdrehmomente am Einzugsgehäuse bzw. Schrägförderer der Erntemaschine vermieden. Um unerwünschte Schwingungen zu vermeiden, können an der Schwenklagerung 14 in der Zeichnung nicht dargestellte Schwingungsdämpfer vorgesehen sein.

Das Erntegerät 10 ist in der in Figur 1 dargestellten Betriebsstellung relativ breit. Um es auf einer öffentlichen Straße transportieren zu können, ohne es von der Erntemaschine abzunehmen und zum Transport auf einem Anhänger abzulegen, sind die Mittelrahmen 28 am Grundrahmen 26 um eine horizontale, parallel zur Vorwärtsfahrtrichtung V verlaufende Achse 32 schwenkbar befestigt. Die Mittelrahmen 28 können daher mittels eines Hydraulikzylinders 34 um ca. 90° in eine Transportstellung verschwenkt werden, in der sie vertikal orientiert sind. Auch die Außenrahmen 30 sind um eine horizontale, parallel zur Vorwärtsfahrtrichtung V verlaufende Achse 30 um einen Winkelbereich - von jedoch etwa 120° - schwenkbar an den Mittelrahmen 28 angebracht. Sie können somit in eine Transportstellung verschwenkt werden, in der sie oberhalb der Mittelrahmen 28 leicht nach innen und unten geneigt angeordnet sind. Zum Verschwenken der Außenrahmen 30 ist ein Antrieb 38 in Form eines Hydraulikzylinders vorgesehen. Die Steuerung des Hydraulikzylinders 34 und des Antriebs 38 erfolgt vorzugsweise derart, dass zunächst die Außenrahmen 30 durch den Antrieb 38 von der Betriebs- in die Transportstellung verschwenkt werden. Danach werden die Mittelrahmen 28 durch die Hydraulikzylinder 34 angehoben. Das Absenken der Mittelrahmen 28 und der Außenrahmen 30 in die Betriebsstellung erfolgt in umgekehrter Reihenfolge. Eine detailliertere Beschreibung des Schwenkmechanismus des Erntegeräts 10 ist in der EP 0 992 817 A gegeben.

Das Erntegerät 10 weist außer den Mittelrahmen 28 und den Außenrahmen 30 eine Reihe weiterer Elemente auf, die von der Betriebsposition in eine Transportposition zu verbringen sind:
Beidseits einer auf der vertikalen Mittelebene M liegenden Teilerstange 44 ist jeweils ein innerer Vordruckbügel 42 angeordnet, wobei der in Figur 1 links der Mittelebene M liegende innere Vordruckbügel 42 in Betriebsstellung eingezeichnet ist, und der innere Vordruckbügel 42 rechts der Mittelebene M in seine parallel zur Vorwärtsfahrtrichtung V orientierte Transportstellung nach vorn verschwenkt wurde. Zum Verschwenken der inneren Vordruckbügel 42 ist ihnen jeweils ein Hydraulikzylinder 46 zugeordnet, der einen Endes am Schwenkrahmen 22, anderen Endes am inneren Vordruckbügel 42 angelenkt ist.

An den Mittelrahmen 28 sind äußere Vordruckbügel 48 befestigt, die um eine horizontale, quer zur Vorwärtsfahrtrichtung V verlaufende Achse nach hinten in ihre Transportstellung verschwenkbar sind. Diese Verschwenkbewegung wird durch jeweils einen Hydraulikzylinder 50 bewerkstelligt, die am Mittelrahmen 28 und an den Vordruckbügeln 48 angelenkt sind.

In der Betriebsstellung sind die Vordruckbügel 42, 48 oberhalb der Einzugs- und Mäheinrichtungen 12 vor den Rahmen 26, 28, 30 angeordnet, um auf dem Feld stehende Pflanzen nach unten zu drücken, so dass sie von den Einzugs- und Mäheinrichtungen erfasst werden können. In der Transportstellung sind die inneren Vordruckbügel 42 nach vorn und die äußeren Vordruckbügel 48 nach hinten verschwenkt, um die Mittelrahmen 28 nach oben schwenken zu können.

Beim Transport ist außerdem der Schwenkrahmen 22 am Trägerrahmen 18 zu arretieren, um während der Fahrt eine unerwünschte Pendelbewegung des Erntegeräts 10 zu unterbinden. Dazu sind beidseits des Schwenkrahmens 22 doppeltwirkende Hydraulikzylinder 52 vorgesehen, die Schwenkrahmen 22 und Trägerrahmen 18 aneinander arretieren, wenn ein erster Druckraum der Hydraulikzylinder 52 mit Hydraulikflüssigkeit beaufschlagt ist, und den Schwenkrahmen 22 frei pendeln lassen, wenn ihr zweiter Druckraum mit Hydraulikflüssigkeit beaufschlagt ist.

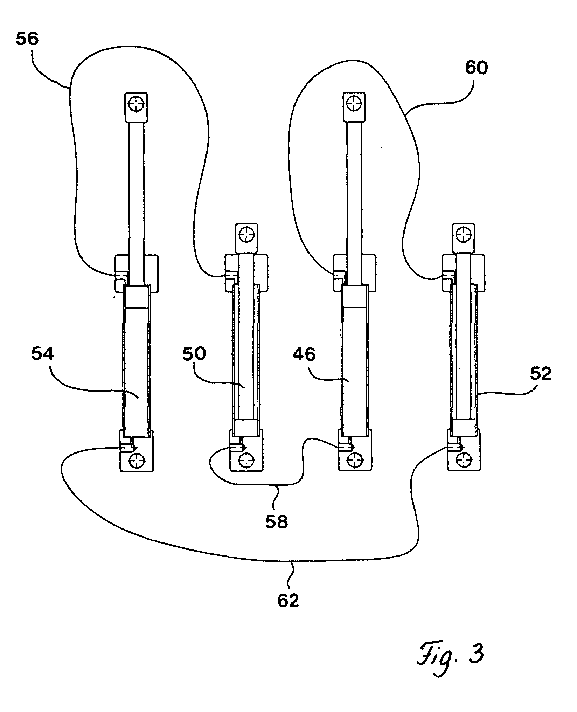

Zwischen Außenrahmen 30 und Mittelrahmen 28 ist ein im folgenden als erster Hydraulikzylinder bezeichneter Hydraulikzylinder 54 angelenkt, der durch den Antrieb 38 beim Verschwenken des Außenrahmens 30 mechanisch auseinandergezogen bzw. zusammengedrückt wird. Anhand der Figur 3 ist erkennbar, wie der Hydraulikzylinder 54 zum Antrieb des - im folgenden als zweiter Hydraulikzylinder bezeichneten - Hydraulikzylinders 50 zum Verschwenken des äußeren Vordruckbügels 48, des - im folgenden als dritter Hydraulikzylinder bezeichneten - Hydraulikzylinders 46 zum Verschwenken des inneren Vordruckbügels 42 und zum Antrieb des - im folgenden als vierten Hydraulikzylinder bezeichneten - Hydraulikzylinder 52 zum Arretieren der Schwenklagerung 14 dient. Die genannten Hydraulikzylinder 46, 50, 52 und 54 sind ausnahmslos doppeltwirkend. Anzumerken ist, dass die in Figur 3 gezeigten Hydraulikzylinder 46, 50, 52 und 54 einer auf einer Seite der vertikalen Mittelebene M liegenden Hälfte des Erntegeräts 10 zugeordnet sind. Gleichartige Hydraulikzylinder sind der zweiten Hälfte des Erntegeräts 10 zugeordnet.

Der Kolbenstangendruckraum des ersten Hydraulikzylinders 54 ist durch eine Leitung 56 mit dem Kolbenstangendruckraum des zweiten Hydraulikzylinders 50 verbunden. Der Kolbenflächendruckraum des zweiten Hydraulikzylinders 50 ist durch eine Leitung 58 mit dem Kolbenflächendruckraum des dritten Hydraulikzylinders 46 verbunden. Der Kolbenstangendruckraum des dritten Hydraulikzylinders 46 ist durch eine Leitung 60 mit dem Kolbenstangendruckraum des vierten Hydraulikzylinders 52 verbunden. Schließlich ist der Kolbenflächendruckraum des vierten Hydraulikzylinders 52 mit dem Kolbenflächendruckraum des ersten Hydraulikzylinders 54 verbunden. Es sind immer Kolbenstangendruckräume mit Kolbenstangendruckräumen verbunden und Kolbenflächendruckräume mit Kolbenflächendruckräumen, um zu erreichen, dass gleiche Hydraulikflüssigkeitsmengen denselben Hub erzeugen. Dadurch erreicht man, dass der erste Hydraulikzylinder der Kette wieder mit einer Flüssigkeitsmenge gefüllt wird, die seinem Hub entspricht.

In Figur 3 sind die Hydraulikzylinder in Transportstellung wiedergegeben. Der erste Hydraulikzylinder 54 ist ausgefahren, da er durch den Antrieb 38 zum Verschwenken des Außenrahmens 30 in die auseinandergezogene Stellung verbracht ist. Der zweite Hydraulikzylinder 50 ist eingefahren, der dritte Hydraulikzylinder 46 ausgefahren und der vierte Hydraulikzylinder 52 ist eingefahren. Die von den Hydraulikzylindern betätigten Elemente des Erntegeräts 10, nämlich der äußere Vordruckbügel 48, der innere Vordruckbügel 42 und die Arretierungseinrichtung der Schwenklagerung 14 sind in der Transportstellung. Jeweils ein mit Hydraulikflüssigkeit gefüllter Druckraum der Hydraulikzylinder 46, 50, 52 und 54 ist mit einem entleerten Druckraum eines anderen Hydraulikzylinders verbunden.

Beim Verschwenken des Außenrahmens 30 wird durch das erfindungsgemäße hydraulische System Hydraulikflüssigkeit zwischen den Druckräumen der einzelnen Hydraulikzylinder 46, 50, 52, 54 hin- und hergepumpt.

Die Betriebsweise des in Figur 3 dargestellten hydraulischen Systems ist derart, dass beim Verschenken des Außenrahmens 30 durch den Antrieb 38 der erste Hydraulikzylinder 54 eingeschoben wird. Dadurch wird der Kolbenflächendruckraum des ersten Hydraulikzylinders 54 verkleinert und über die Leitung 62 der Kolbenflächendruckraum des vierten Hydraulikzylinders 52 mit Druck beaufschlagt. Der vierte Hydraulikzylinder 52 streckt sich aus und die Arretierung der Schwenklagerung 14 wird gelöst. Gleichzeitig wird der Kolbenstangendruckraum des vierten Hydraulikzylinders 52 verkleinert und über die Leitung 60 der Kolbenstangendruckraum des dritten Hydraulikzylinders 46 mit Hydraulikflüssigkeit beaufschlagt, so dass er sich zusammenzieht und den inneren Vordruckbügel 42 in die Betriebsstellung verschwenkt. Beim Zusammenziehen des dritten Hydraulikzylinders 46 verkleinert sich dessen Kolbenflächendruckraum, weshalb Hydraulikflüssigkeit durch die Leitung 58 strömt und den Kolbenflächendruckraum des zweiten Hydraulikzylinders 50 mit Druck beaufschlagt. Daher streckt sich der zweite Hydraulikzylinder 50 aus und verschwenkt den äußeren Vordruckbügel 48 in die Betriebsstellung. Die aus dem Kolbenstangendruckraum des zweiten Hydraulikzylinders 50 herausgedrückte Hydraulikflüssigkeit gelangt über die Leitung 56 in den Kolbenflächendruckraum des ersten Hydraulikzylinders 54.

Die Funktionsweise der Hydraulikzylinder 46, 50, 52, 54 beim Verschwenken der Elemente des Erntegeräts von der Betriebsstellung in die Transportstellung ist demgegenüber umgekehrt. Der erste Hydraulikzylinder 54 wird durch den nach oben verschwenkenden Außenrahmen auseinandergezogen, so dass der zweite Hydraulikzylinder 50 sich zusammenzieht und den äußeren Vordruckbügel 48 nach hinten in die Transportstellung klappt. Dabei wird über die Leitung 58 der dritte Hydraulikzylinder 46 mit Druck beaufschlagt; er streckt sich aus und der innere Vordruckbügel 42 wird nach vorn in die Transportstellung verschwenkt. Weiterhin zieht sich der vierte Hydraulikzylinder 52 zusammen und die Schwenklagerung 14 ist arretiert. Die aus dem vierten Hydraulikzylinder 52 herausgedrückte Hydraulikflüssigkeit strömt in den Kolbenflächendruckraum des ersten Hydraulikzylinders 54 hinein.

Die Ansteuerung des Hydraulikzylinders 34 und des Antriebs 38 erfolgt derart, dass bei einem in Betriebsstellung befindlichen Erntegerät zuerst der Antrieb 38 betätigt wird. Durch das in Figur 3 dargestellte hydraulische System werden die inneren und äußeren Vordruckbügel 42, 48 in die Transportstellung verbracht und die Schwenklagerung 14 durch den vierten Hydraulikzylinder 52 arretiert. Erst nach Abschluss dieser Bewegungen wird der Hydraulikzylinder 34 in Betrieb gesetzt, um den Mittelrahmen 28 zu verschwenken. Der Übergang von der Transportstellung in die Betriebsstellung erfolgt in umgekehrter Reihenfolge.

## Patentansprüche

1. Landwirtschaftliches Erntegerät (10) mit einem ersten Element, das durch einen Antrieb (38) von einer Betriebs- in eine Transportstellung und/oder von einer Transport- in eine Betriebsstellung verbringbar ist, und mit einem zweiten Element, das mittels eines ihm zugeordneten Hydraulikzylinders (50) von einer Betriebs- in eine Transportstellung und/oder von einer Transport- in eine Betriebsstellung verbringbar ist, **dadurch gekennzeichnet, dass** der dem zweiten Element zugeordnete, zweite Hydraulikzylinder (50) mit einem ersten Hydraulikzylinder (54), der durch den Antrieb (38) des ersten Elements bewegbar ist, in hydraulischer Antriebsverbindung steht.

2. Erntegerät (10) nach Anspruch 1, **dadurch gekennzeichnet, dass** der erste Hydraulikzylinder (54) und der zweite Hydraulikzylinder (50) doppeltwirkende Zylinder sind.

3. Erntegerät (10) nach Anspruch 1 oder 2, **gekennzeichnet durch** ein drittes Element, das mit einem ihm zugeordneten, dritten Hydraulikzylinder (46) von einer Betriebs- in eine Transportstellung und/oder von einer Transport- in eine Betriebsstellung verbringbar ist, wobei der dritte Hydraulikzylinder (46) mit dem ersten Hydraulikzylinder (54) in hydraulischer Antriebsverbindung steht.

4. Erntegerät (10) nach Anspruch 3, **gekennzeichnet durch** ein viertes Element, das mit einem ihm zugeordneten, vierten Hydraulikzylinder (52) von einer Betriebs- in eine Transportstellung und/oder von einer Transport- in eine Betriebsstellung verbringbar ist, wobei der vierte Hydraulikzylinder (52) mit dem ersten Hydraulikzylinder in hydraulischer Antriebsverbindung steht.

5. Erntegerät (10) nach einem der Ansprüche 1 bis 4, **dadurch gekennzeichnet, dass** der erste Hydraulikzylinder (54) und der zweite Hydraulikzylinder (50) und vorzugsweise der dritte Hydraulikzylinder (46) und/oder vierte Hydraulikzylinder (52) einen geschlossenen hydraulischen Kreis bilden.

6. Erntegerät (10) nach Anspruch 5, **dadurch gekennzeichnet, dass** jeweils ein Kolbenstangendruckraum eines Hydraulikzylinders (46, 50, 52, 54) durch eine Leitung (56, 60) mit einem Kolbenstangendruckraum eines anderen Hydraulikzylinders (46, 50, 52, 54) und jeweils ein Kolbenflächendruckraum eines Hydraulikzylinders (46, 50, 52, 54) durch eine Leitung (58, 62) mit einem Kolbenflächendruckraum eines anderen Hydraulikzylinders (46, 50, 52, 54) hydraulisch verbunden ist.

7. Erntegerät (10) nach einem der vorhergehenden Ansprüche, **dadurch gekennzeichnet, dass** es ein mit Einzugs- und Mäheinrichtungen (12) ausgestatteter Mähvorsatz einer Erntemaschine ist.

8. Erntegerät (10) nach Anspruch 7, **dadurch gekennzeichnet, dass** das erste Element ein schwenkbarer Rahmen (30) einer Einzugs- und Mäheinrichtung (12) ist.

9. Erntegerät (10) nach Anspruch 7 oder 8, **dadurch gekennzeichnet, dass** das zweite und/oder dritte Element ein Vordruckbügel (42, 48) ist.

10. Erntegerät (10) nach einem der Ansprüche 7 bis 9, **dadurch gekennzeichnet, dass** das vierte Element eine Arretierung einer Schwenklagerung (14) des Erntegeräts (10) an einer Erntemaschine ist.
